# EUROPEAN PATENT APPLICATION

(11) **EP 4 075 299 A1**
(43) Date of publication of application: **19.10.2022**
(21) Application number: 21916651.9
(22) Date of filing: 16.09.2021
(51) Int. Cl.: G06F 16/435

(54) **METHOD AND APPARATUS FOR RECOMMENDING MULTIMEDIA RESOURCE**

(30) Priority: 05.01.2021 CN 202110005194
(71) Applicant: Beijing Dajia Internet Information Technology Co., Ltd., Beijing 100085 (CN)
(72) Inventor: TANG, Xiao, Beijing 100085 (CN)
(74) Representative: Attfield, Andrew John
(86) International application number: PCT/CN2021/118819
(87) International publication number: WO 2022/148057

(57) **Abstract**

The present disclosure relates to a method and apparatus for recommending multimedia resources. The method for recommending multimedia resources includes: in response to a multimedia playing instruction, acquiring a target recommendation tree, and the target recommendation tree being constructed based on a content association between a target multimedia resource and recommended multimedia resources; determining a target parent node corresponding to the target multimedia resource in the target recommendation tree; taking multimedia resources corresponding to at least two child nodes of the target parent node as the recommended multimedia resources; and playing the target multimedia resource and displaying presenting information of the recommended multimedia resources on a multimedia playing page.

## Description

### CROSS-REFERENCE TO RELATED APPLICATIONS

The present disclosure is based on and claims priority to Chinese Patent Application No. 202110005194.4, filed on January 5, 2021, which is incorporated herein by reference in its entirety.

### TECHNICAL FIELD

The present disclosure relates to the technology field of computer vision processing, and in particular to a method, apparatus and storage medium for recommending multimedia resources.

### BACKGROUND

The richness of multimedia resources has attracted a large number of users to watch, and the recommendation of multimedia resources has also attracted more and more attention.

### SUMMARY

The present disclosure provides a method, apparatus and storage medium for recommending multimedia resources. The technical solutions of the present disclosure are as follows.

According to an aspect of the present disclosure, there is provided a method for recommending multimedia resources. The method for recommending multimedia resources is applied to a terminal and includes: in response to a multimedia playing instruction, acquiring a target recommendation tree, and the target recommendation tree being constructed based on a content association between a target multimedia resource and recommended multimedia resources; determining a target parent node corresponding to the target multimedia resource in the target recommendation tree; taking multimedia resources corresponding to at least two child nodes of the target parent node as the recommended multimedia resources; and playing the target multimedia resource and displaying presenting information of the recommended multimedia resources on a multimedia playing page.

In some implementations, the in response to the multimedia playing instruction, acquiring the target recommendation tree includes: in response to that the multimedia playing instruction comprises identification information of the target multimedia resource, acquiring a local recommendation tree, and in response to that a node corresponding to the identification information in the local recommendation tree is a non-end node, taking the local recommendation tree as the target recommendation tree; and in response to that the multimedia playing instruction does not comprise the identification information of the target multimedia resource, or in response to that the node corresponding to the identification information in the local recommendation tree is an end node, requesting the target recommendation tree from a server.

In some implementations, the determining the target parent node corresponding to the target multimedia resource in the target recommendation tree includes: in response to that the multimedia playing instruction comprises the identification information of the target multimedia resource, determining a node corresponding to the identification information in the target recommendation tree as the target parent node; and in response to that the multimedia playing instruction does not comprise the identification information of the target multimedia resource, determining a root node in the target recommendation tree as the target parent node.

In some implementations, the playing the target multimedia resource and displaying presenting information of the recommended multimedia resources on the multimedia playing page includes: playing the target multimedia resource in a first region of the multimedia playing page; and displaying the presenting information of the recommended multimedia resources in a second region of the multimedia playing page.

In some implementations, the second region is below the first region.

According to a second aspect of the implementations of the present disclosure, there is provided a method for generating a recommendation tree for multimedia resources. The method for generating the recommendation tree for multimedia resources is applied to a server and includes: receiving a target recommendation tree request, the target recommendation tree request comprising user information; based on portrait information corresponding to the user information, acquiring a multimedia resource corresponding to a root node and multimedia resources corresponding to at least two first-layer branch nodes; based on the multimedia resources corresponding to the first-layer branch nodes and the portrait information, acquiring preference information corresponding to the first-layer branch nodes; and based on the preference information corresponding to the first-layer branch nodes, acquiring multimedia resources corresponding to at least two second-layer branch nodes, wherein the at least two second-layer branch nodes correspond to the first-layer branch nodes.

In some implementations, the target recommendation tree request further includes one or more selected multimedia identifications; wherein said based on the portrait information corresponding to the user information, acquiring the multimedia resource corresponding to the root node and the multimedia resources corresponding to the at least two first-layer branch nodes includes: taking a multimedia resource corresponding to an end multimedia identification in the selected multimedia identifications as the multimedia resource corresponding to the root node; determining interest information based on the selected multimedia identifications; generating target portrait information corresponding to the user information based on the interest information and the portrait information; and based on the target portrait information, acquiring multimedia resources corresponding to the at least two first-layer branch nodes.

According to a third aspect of the implementations of the present disclosure, there is provided an apparatus for recommending multimedia resources. The apparatus for recommending multimedia resources includes: a target recommendation tree acquisition module configured to acquire a target recommendation tree in response to a multimedia playing instruction, the target recommendation tree being constructed based on a content association between a target multimedia resource and recommended multimedia resources; a target parent node determination module configured to determine a target parent node corresponding to the target multimedia resource in the target recommendation tree; a recommended multimedia resource acquisition module configured to take multimedia resources corresponding to at least two child nodes of the target parent node as the recommended multimedia resources; and a multimedia resource recommendation module configured to play the target multimedia resource and display presenting information of the recommended multimedia resources on a multimedia playing page.

In some implementations, the target recommendation tree acquisition module includes: a first target recommendation tree acquisition unit configured to, in response to that the multimedia playing instruction comprises identification information of the target multimedia resource, acquire a local recommendation tree, and in response to that a node corresponding to the identification information in the local recommendation tree is a non-end node, take the local recommendation tree as the target recommendation tree; and a second target recommendation tree acquisition unit configured to, in response to that the multimedia playing instruction does not comprise the identification information of the target multimedia resource, or in response to that the node corresponding to the identification information in the local recommendation tree is an end node, request the target recommendation tree from a server.

In some implementations, the target parent node determination module includes: a first target parent node determination unit configured to, in response to that the multimedia playing instruction comprises the identification information of the target multimedia resource, determine a node corresponding to the identification information in the target recommendation tree as the target parent node; and a second target parent node determination unit configured to, in response to that the multimedia playing instruction does not comprise the identification information of the target multimedia resource, determine a root node in the target recommendation tree as the target parent node.

In some implementations, the multimedia resource recommendation module includes: a target multimedia resource playing unit configured to play the target multimedia resource in a first region of the multimedia playing page; and a recommended multimedia resource display unit configured to display the presentation information of the recommended multimedia resources in a second region of the multimedia playing page.

In some implementations, the second region is below the first region.

According to a fourth aspect of the implementations of the present disclosure, there is provided an apparatus for generating a recommendation tree for multimedia resources. The apparatus for generating the recommendation tree for multimedia resources includes a request receiving module configured to receive a target recommendation tree request, the target recommendation tree request comprising user information; a first multimedia resource acquisition module configured to acquire a multimedia resource corresponding to a root node and multimedia resources corresponding to at least two first-layer branch nodes based on portrait information corresponding to the user information; a preference information acquisition module configured to acquire preference information corresponding to the first-layer branch nodes based on the multimedia resources corresponding to the first-layer branch nodes and the portrait information; and a second multimedia resource acquisition module configured to acquire multimedia resources corresponding to at least two second-layer branch nodes based on the preference information corresponding to the first-layer branch nodes, wherein the at least two second-layer branch nodes correspond to the first-layer branch nodes.

In some implementations, the target recommendation tree request further includes one or more selected multimedia identifications, and the first multimedia resource acquisition module includes: a root node multimedia resource acquisition unit configured to take a multimedia resource corresponding to an end multimedia identification in the selected multimedia identifications as the multimedia resource corresponding to the root node; an interest information determination unit configured to determine interest information based on the selected multimedia identifications; a target portrait information generating unit configured to generate target portrait information corresponding to the user information based on the interest information and the portrait information; and a first multimedia resource acquisition unit configured to acquire multimedia resources corresponding to the at least two first-layer branch nodes based on the target portrait information.

According to a fifth aspect of the implementations of the present disclosure, there is provided electronic equipment. The electronic equipment includes: a processor; a memory for storing instructions executable by the processor; wherein the processor is configured to execute the instructions to achieve the method for recommending multimedia resources and the method for generating the recommendation tree for multimedia resources mentioned above.

According to a sixth aspect of the implementations of the present disclosure, there is provided a storage medium, when instructions in the storage medium are executed by a processor of electronic equipment, the electronic equipment can execute the method for recommending multimedia resources and the method for generating the recommendation tree for multimedia resources mentioned above.

According to a seventh aspect of the implementations of the present disclosure, there is provided a computer program product comprising computer instructions, when the computer instructions are executed by a processor, cause the computer to perform the method in any one of the first aspect of the implementations of the present disclosure or cause the computer to perform the method in any one of the second aspect of the implementations of the present disclosure.

By recommending multimedia resources to users in the form of a recommendation tree, playing the target multimedia resource on the multimedia playing page, and displaying the presenting information of at least two recommended multimedia resources on the multimedia playing page, users can select from at least two recommended multimedia resources when viewing the target multimedia resource, thus improving the selection flexibility of recommended multimedia resources and improving the user experience; at the same time, it can also improve the user's screening efficiency of multimedia resources, and can quickly locate the user's preference, so as to achieve efficient and accurate recommendation of multimedia resources. In addition, by recommending multimedia resources to users in the form of a recommendation tree, the quantity of the recommended multimedia resources can be increased, the number of interactions with the server can be reduced, and the energy consumption of the terminal can be reduced.

### BRIEF DESCRIPTION OF THE DRAWINGS

FIG. 1 is a schematic diagram of recommending multimedia resources in the prior art.
FIG. 2 is a schematic diagram of an application environment according to some implementations.
FIG. 3 is a flowchart illustrating a method for recommending multimedia resources according to some implementations.
FIG. 4 is a schematic diagram illustrating a recommendation tree of multimedia resources according to some implementations.
FIG. 5 is a flowchart illustrating a method for acquiring a target recommendation tree in response to a multimedia playing instruction according to some implementations.
FIG. 6 is a flowchart illustrating a method for recommending multimedia resources according to some implementations.
FIG. 7 is a schematic diagram illustrating a first region and a second region according to some implementations.
FIG. 8 is a schematic flowchart illustrating a method for recommending multimedia resources according to some implementations.
FIG. 9 is a flowchart illustrating a method for generating a recommendation tree for multimedia resources according to some implementations.
FIG. 10 is a flowchart illustrating a method for acquiring a multimedia resource corresponding to a root node and multimedia resources corresponding to at least two first-layer branch nodes based on portrait information corresponding to user information, according to some implementations.
FIG. 11 is a schematic diagram illustrating a recommendation tree of multimedia resources according to some implementations.
FIG. 12 is a block diagram of an apparatus for recommending multimedia resources according to some implementations.
FIG. 13 is a block diagram of an apparatus for generating a recommendation tree for multimedia resources according to some implementations.
FIG. 14 is a block diagram of electronic equipment for recommending multimedia resources according to some implementations.
FIG. 15 is a block diagram of electronic equipment showing a method for generating a recommendation tree for multimedia resources according to some implementations.

### DETAILED DESCRIPTION

In order to make those skilled in the art better understand the technical solutions of the present disclosure, the technical solutions in the implementations of the present disclosure will be clearly and completely described below with reference to the accompanying drawings.

It should be noted that the terms 'first', 'second' and the like in the description and claims of the present disclosure and the above drawings are used to distinguish similar objects, and are not necessarily used to describe a specific sequence or order. It is to be understood that the data so used are interchangeable under appropriate circumstances so that the implementations of the disclosure described herein can be practiced in sequences other than those illustrated or described herein.

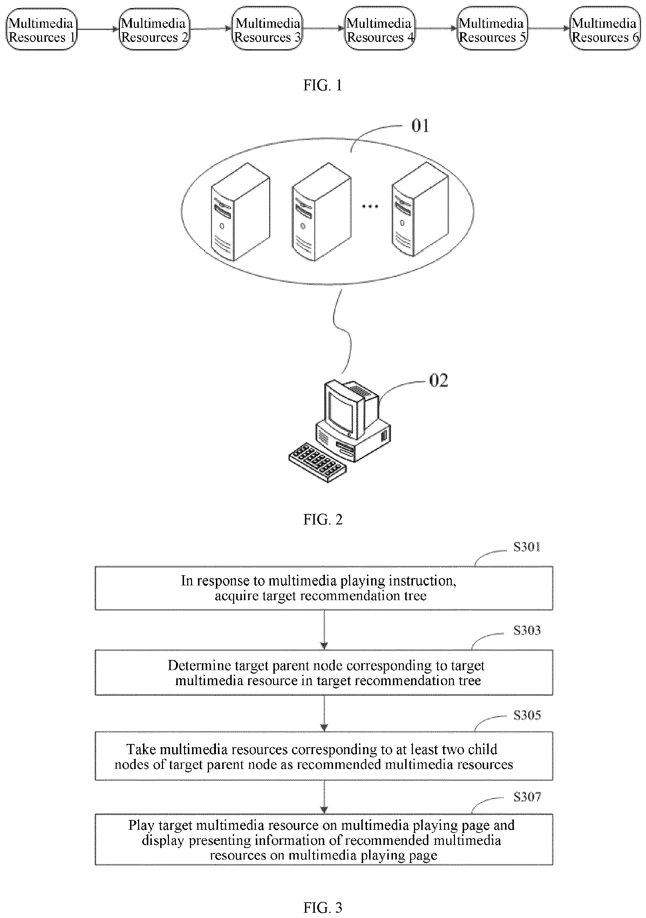

In the related art, multimedia resources viewed by a user are generally a certain number of multimedia resources arranged in a fixed order recommended by a server, as shown in FIG. 1. In this multimedia resource recommendation mode, the user can only watch a certain number of multimedia resources in sequence, that is, the user can only watch from multimedia resource 1 to multimedia resource 6 in sequence. The selection operation of multimedia resources is inflexible and inefficient, resulting in the inability to quickly locate the user's preferred multimedia resources, which in turn leads to inaccurate recommendation of multimedia resources.

To this end, the present disclosure proposes a new method for recommending multimedia resources.

Referring to FIG. 2, FIG. 2 is a schematic diagram of an application environment according to some implementations. As shown in FIG. 2, the application environment may include a server 01 and a terminal (i.e., a client) 02.

In some implementations, the server 01 may be used to generate a recommendation tree of multimedia resources. Specifically, the server 01 may be an independent physical server, or a server cluster or distributed system composed of a plurality of physical servers, or may be a cloud server, which provides cloud services, cloud databases, cloud computing, cloud functions, cloud storage, network services, cloud communications, middleware services, domain name services, security services, Content Delivery Network (CDN), and basic cloud computing services such as big data and artificial intelligence platforms, etc.

In some implementations, the terminal 02 may be used to implement the method for recommending multimedia resources. Specifically, the terminal 02 may include, but is not limited to, smart phones, desktop computers, tablet computers, laptop computers, smart speakers, digital assistants, augmented reality (AR) devices/virtual reality (VR) devices, smart wearable devices and other types of electronic equipment. In some implementations, the operating system running on electronic equipment may include, but is not limited to, an Android system, an IOS system, linux, windows, and the like.

In addition, it should be noted that what is shown in FIG. 2 is only one application environment of the method for recommending multimedia resources provided by the present disclosure, and is not limited in the present disclosure.

In implementations of the present application, the above-mentioned server 01 and the terminal 02 may be directly or indirectly connected through wired or wireless communication, which is not limited in the present disclosure.

FIG. 3 is a flowchart of a method for recommending multimedia resources according to some implementations. As shown in FIG. 3, the method for recommending multimedia resources is executed by a terminal, and may include the following steps.

In S301, in response to a multimedia playing instruction, a target recommendation tree is acquired.

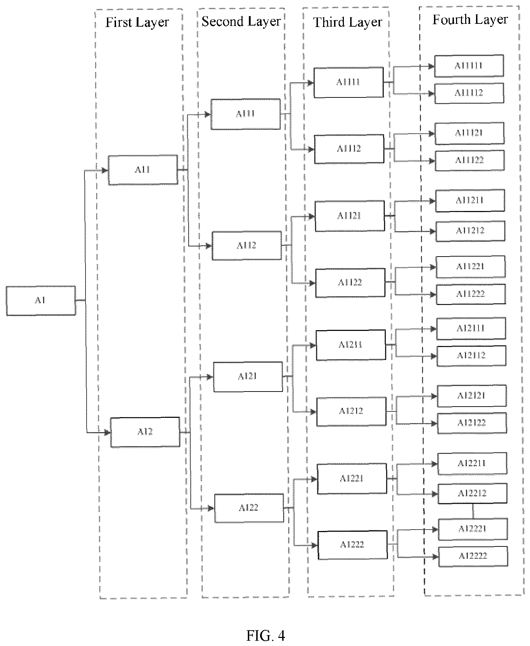

In some implementations of the present disclosure, the target recommendation tree may be constructed based on content association between a target multimedia resource and recommended multimedia resources. Nodes in the target recommendation tree, i.e., from a root node to an end node, may represent a recommendation order of corresponding multimedia resources. The target recommendation tree may have a preset number of layers. Each node may have at least two child nodes, and each node has a corresponding multimedia resource, and the present disclosure does not limit the target recommendation tree. As an example, the target recommendation tree may be a target recommendation tree as shown in FIG. 4, and the preset number of layers may be 4. For example, the multimedia resources of a first layer may include A11 and A12; the multimedia resources of a second layer may include A111, A112, A121 and A122; the multimedia resources of a third layer may include A1111, A1112, A1121, ..., A1222; the multimedia resources of a fourth layer may include A11111, A11112, A11121, ..., A12222. As an example, the multimedia resources may include short videos, pictures, etc., which are not limited in the present disclosure.

In practical applications, the multimedia playing instruction can be triggered by the user, and in response to the multimedia playing instruction, the target recommendation tree can be obtained locally. In response to that the target recommendation tree does not exist locally, the target recommendation tree can be obtained from the server. For example, in response to that the multimedia playing instruction is triggered when the user enters a multimedia playing page, the target recommendation tree may be obtained from the server. A target recommendation tree request may be sent to the server, and the target recommendation tree request may include user information, so that the target recommendation tree corresponding to the user information may be acquired from the server. In response to that the multimedia playing instruction is triggered when the user selects the recommended multimedia resource on the multimedia playing page, a local recommendation tree can be acquired. In response to that the recommended multimedia resource selected by the user corresponds to a non-end node in the local recommendation tree, the local recommendation tree may be determined as the target recommendation tree. In response to that the recommended multimedia resource selected by the user corresponds to an end node in the local recommendation tree, the target recommendation tree may be requested from the server.

In S303, a target parent node corresponding to a target multimedia resource is determined in the target recommendation tree.

In some implementations of the present disclosure, the target multimedia resource may refer to a multimedia resource used for playing. The target multimedia resource can be determined based on the multimedia playing instruction. In some implementations, the target multimedia resource may be determined according to whether the multimedia playing instruction includes identification information of the target multimedia resource. For example, in response to that the multimedia playing instruction includes the identification information of the target multimedia resource, the multimedia resource corresponding to the identification information can be determined as the target multimedia resource; and in response to that the multimedia playing instruction does not include the identification information of the target multimedia resource, the multimedia resource corresponding to the root node in the target recommendation tree can be determined as the target multimedia resource. Correspondingly, the S303 may include the following operations: in response to that the multimedia playing instruction includes the identification information of the target multimedia resource, determining a node corresponding to the identification information in the target recommendation tree as the target parent node; and in response to that the multimedia playing instruction does not include the identification information of the target multimedia resource, determining the root node in the target recommendation tree as the target parent node.

For example, as shown in FIG. 4, in response to that the multimedia playing instruction does not include the identification information of the target multimedia resource, the root node where A1 is located may be determined as the target parent node. In response to that the multimedia playing instruction includes the identification information of the target multimedia resource, for example, when the multimedia playing instruction includes the identification information of the target multimedia resource A11, the node where A11 is located may be determined as the target parent node. The target parent node is determined according to whether the multimedia playing instruction includes the identification information of the target multimedia resource, which can be applicable to a situation that the user triggers the multimedia playing instruction when enters the multimedia playing page, and can also be applicable to a situation that user triggers the multimedia playing instruction when selects the recommended multimedia resource on the multimedia playing page, thus the accuracy of determining the target parent node is ensured. In addition, based on the determination of the target parent node, the determination of the subsequent recommended multimedia resources can be realized, and the accurate recommendation of multimedia resources based on the target recommendation tree can be realized.

In S305, multimedia resources corresponding to at least two child nodes of the target parent node are taken as recommended multimedia resources.

In S307, the target multimedia resource is played on the multimedia playing page, and presenting information of the recommended multimedia resources is displayed on the multimedia playing page.

In the some implementations of the present disclosure, the multimedia resources corresponding to at least two child nodes of the target parent node can be taken as the recommended multimedia resources; and the target multimedia resource can be played on the multimedia playing page, and the presenting information of the recommended multimedia resources can be displayed on the multimedia playing page. The presenting information of the recommended multimedia resources may include one frame of image in the recommended multimedia resources, description information of the recommended multimedia resources, and a segment of the recommended multimedia resources, which is not limited in the present disclosure.

As an example, as shown in FIG. 4, in the case that the target multimedia resource is A111, it can be determined that the multimedia resources corresponding to at least two child nodes of the target parent node corresponding to the multimedia resource A111 (that is, the node where A111 is located) include A1111 and A1112, so the multimedia resources A1111 and A1112 can be treated as recommended multimedia resources. Therefore, A111 can be played on the multimedia playing page, and the presenting information of A1111 and the presenting information of A1112 can be displayed on the multimedia playing page, for example, one frame of image in A1111 and one frame of image in A1112 can be displayed.

In some implementations, in the case that the target recommendation tree includes the presenting information of the multimedia resources corresponding to the nodes, the presenting information of the recommended multimedia resources may be obtained from the target recommendation tree. In the case that the target recommendation tree does not include the presenting information of the multimedia resources corresponding to the nodes, the presenting information of the multimedia resources can be obtained according to the multimedia resources. For example, one frame of image can be extracted from the multimedia resources to treat as the presenting information of the multimedia resources, which is not limited in the present disclosure.

The multimedia resources are recommend to users in the form of a recommendation tree, the target multimedia resource is played on the multimedia playing page, and the presenting information of at least two recommended multimedia resources are displayed on the multimedia playing page, so that when viewing the target multimedia resource, the user can select from at least two recommended multimedia resources. It can improve the selection flexibility of recommended multimedia resources and improve the user experience; at the same time, it can also improve the user's screening efficiency of multimedia resources, and can quickly locate the user's preference, so as to achieve efficient and accurate recommendation of multimedia resources. In addition, by recommending multimedia resources to users in the form of a recommendation tree, the quantity of the recommended multimedia resources can be increased, the number of interactions with the server can be reduced, and the energy consumption of the terminal can be reduced.

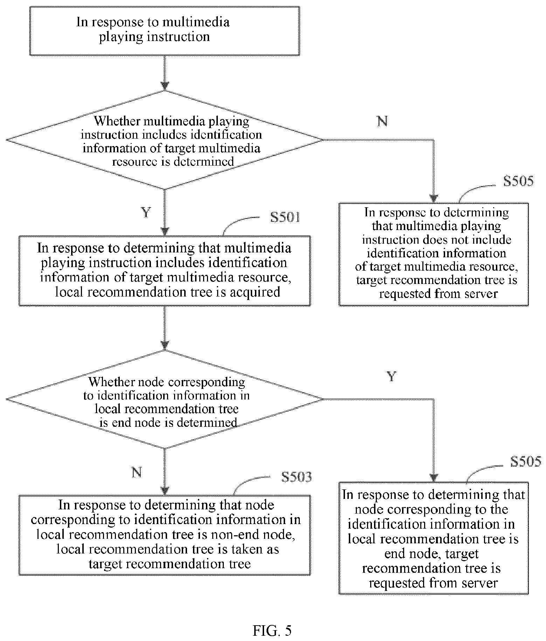

FIG. 5 is a flowchart illustrating a method for acquiring a target recommendation tree in response to a multimedia playing instruction according to some implementations. As shown in FIG. 5, the S301 may include following steps.

In S501, in response to that the multimedia playing instruction includes the identification information of the target multimedia resource, a local recommendation tree is acquired.

In S503, in response to that a node corresponding to the identification information in the local recommendation tree is a non-end node, the local recommendation tree is taken as the target recommendation tree.

In S505, in response to that the multimedia playing instruction does not include the identification information of the target multimedia resource, or in response to that the node corresponding to the identification information in the local recommendation tree is an end node, the target recommendation tree is requested from the server.

In some implementations of the present disclosure, in the case that the multimedia playing instruction is triggered when the user enters the multimedia playing page, the multimedia playing instruction does not include identification information of the target multimedia resource; and in the case that the multimedia playing instruction is triggered when the user selects the recommended multimedia resources on the multimedia playing page, the multimedia playing instruction may include identification information of the target multimedia resource. Based on this, it can be judged whether the multimedia playing instruction includes the identification information of the target multimedia resource, and in response to that the multimedia playing instruction does not include the identification information of the target multimedia resource, the target recommendation tree can be requested from the server. For example, a target recommendation tree request may be sent to the server, and the target recommendation tree request may include user information. The server may generate a corresponding target recommendation tree based on the user information, and send the target recommendation tree to the terminal corresponding to the user information, so as to receive the target recommendation tree.

In response to that the multimedia playing instruction includes the identification information of the target multimedia resource, the local recommendation tree can be acquired. Further, it can be judged whether the node corresponding to the identification information in the local recommendation tree is an end node. In response to that the node corresponding to the identification information in the local recommendation tree is a non-end node, the local recommendation tree is taken as the target recommendation tree; and in response to that the node corresponding to the identification information in the local recommendation tree is an end node, the target recommendation tree is requested from the server. For example, a target recommendation tree request may be sent to the server, and the target recommendation tree request may include user information and one or more selected multimedia identifications, and the selected multimedia identifications may refer to one or more identifications of the multimedia selected by the user in the local recommendation tree. The server can generate a corresponding target recommendation tree according to the user information and the selected multimedia identifications, and send the target recommendation tree to the terminal corresponding to the user information, so that the target recommendation tree can be received. The received multimedia resource corresponding to the root node of the target recommendation tree is the same as the target multimedia resource corresponding to the identification information of the target multimedia resource included in the multimedia playing instruction.

In some implementations, as shown in FIG. 4, in response to that the multimedia playing instruction includes the identification information of the target multimedia resource A11, a local recommendation tree may be obtained, and the local recommendation tree may be as shown in FIG. 4. Furthermore, it can be determined whether the node corresponding to the identification information of multimedia resource A11 in the local recommendation tree is an end node. In response to determining that the node corresponding to the identification information of A11 is a first-layer branch node, that is, a non-end node, the local recommendation tree can be taken as the target recommendation tree.

In other implementations, as shown in FIG. 4, in response to that the multimedia playing instruction includes the identification information of the target multimedia resource A11222, a local recommendation tree may be obtained, and the local recommendation tree may be as shown in FIG. 4. The node corresponding to the identification information of A11222 in the local recommendation tree is a fourth-layer branch node, that is, the end node, so the target recommendation tree can be requested from the server. For example, a target recommendation tree request may be sent to the server, and the target recommendation tree request may include user information and one or more selected multimedia identifications, and the selected multimedia identifications may refer to one or more identifications of the multimedia selected by the user in the local recommendation tree. The server may generate a corresponding target recommendation tree based on the user information and the selected multimedia identifications, and may send the target recommendation tree to the terminal corresponding to the user information. The multimedia resource corresponding to the root node of the target recommendation tree is A11222, which is the same as the target multimedia resource corresponding to the identification information of the target multimedia resource included in the multimedia playing instruction.

By a way of determining and acquiring the target recommendation tree according to whether the multimedia playing instruction includes the identification information of the target multimedia resource, the target recommendation tree can be accurately acquired, and frequent interaction with the server can be avoided.

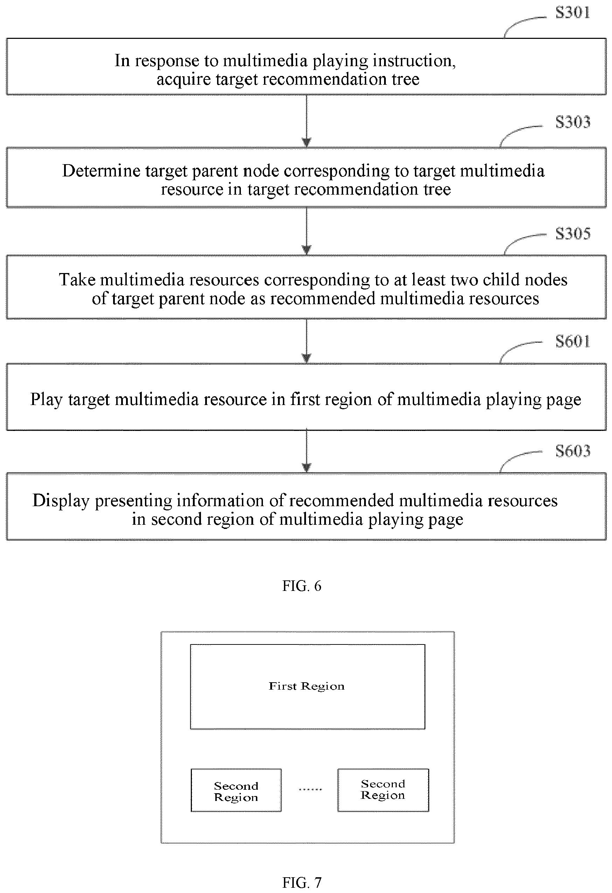

FIG. 6 is a flowchart illustrating a method for recommending multimedia resources according to some implementations. As shown in FIG 6, the S307 may include the following steps.

In S601, the target multimedia resource is played in a first region of the multimedia playing page.

In S603, presenting information of recommended multimedia resources is displayed in a second region of the multimedia playing page.

In some implementations, as shown in FIG. 7, the second region may be below the first region, and the number of the second regions may be the same as the number of recommended multimedia resources. The present disclosure does not limit this, as long as the presenting information of the recommended multimedia resources do not affect the playing performance of the target multimedia resource, and the presenting information of the recommended multimedia resources is capable to obtain effective attention of the user.

It should be noted that FIG. 7 is only an example, and does not limit the present disclosure. The number of the second region may also be 1, and presenting information of at least two recommended multimedia resources may be displayed in the second region. The present disclosure does not limit this.

By setting the first region and the second region, the target multimedia resource and the recommended multimedia resources can be presented in a differentiated manner. Moreover, by setting the second region below the first region, the recommended multimedia resources can be effectively displayed for the user to select and operate without affecting the playing of the target multimedia resource.

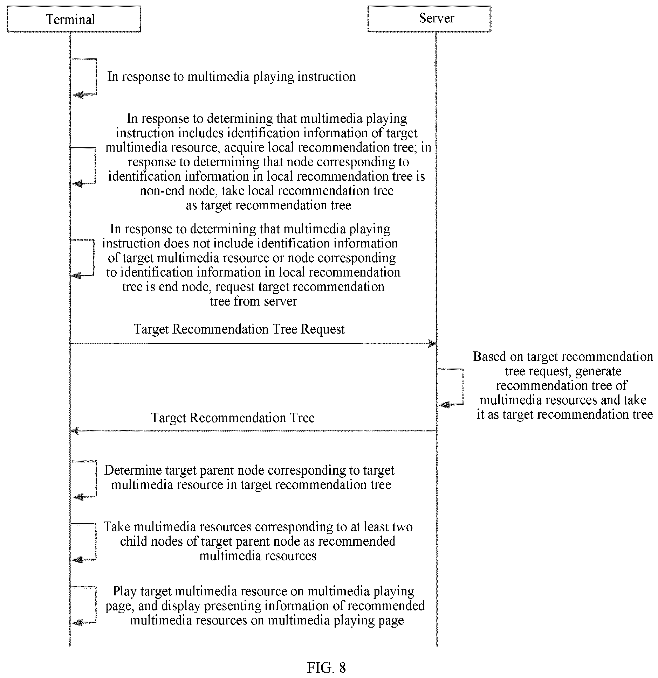

FIG. 8 is a schematic flowchart illustrating a method for recommending multimedia resources according to some implementations. As shown in FIG. 8, in response to the multimedia playing instruction, the terminal can determine whether the multimedia playing instruction includes the identification information of the target multimedia resource, and in response to determining that the multimedia playing instruction includes the identification information of the target multimedia resource, a local recommendation tree can be obtained; and then continue to determine whether the node corresponding to the identification information in the local recommendation tree is the end node. In response to determining that the node corresponding to the identification information in the local recommendation tree is a non-end node, the local recommendation tree can be taken as the target recommendation tree; and in response to determining that the node corresponding to the identification information in the local recommendation tree is an end node, the target recommendation tree can be requested from the server. In response to determining that the identification information of the target multimedia resource is not included in the multimedia playing instruction, the target recommendation tree may be requested from the server. For the above judgment on the multimedia playing instruction, reference may be made to the content of FIG. 5 mentioned above.

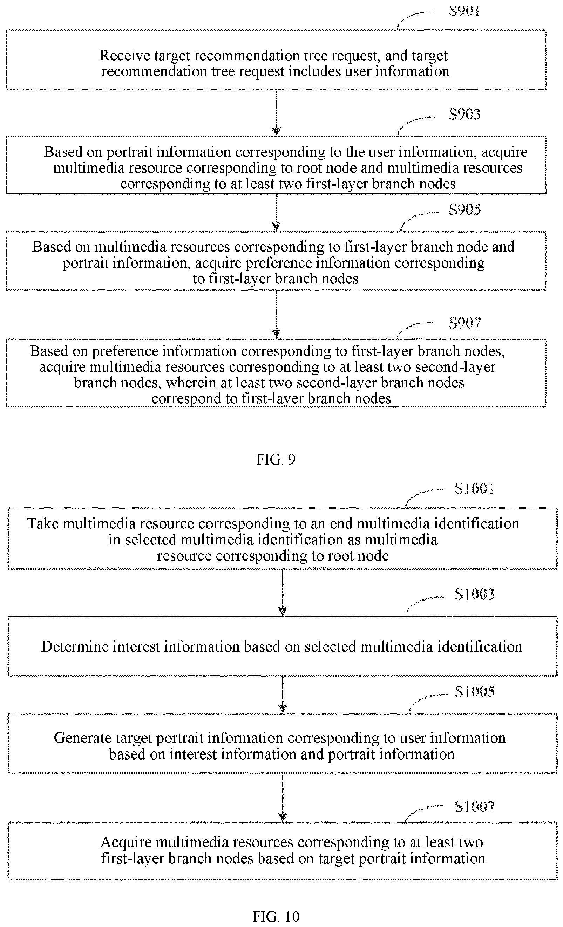

As shown in FIG. 8, in the case that the target recommendation tree needs to be requested from the server, the target recommendation tree request can be sent to the server. The server receives the target recommendation tree request, and can generate, based on the target recommendation tree request, a recommendation tree of the multimedia resources to treat as the target recommendation tree. For the specific generation process, refer to the corresponding contents of FIG. 9 and FIG. 10 below. The server may send the target recommendation tree to a corresponding terminal, and the corresponding terminal may be a terminal that sends the target recommendation tree request. The terminal receives the target recommendation tree, and can determine the target parent node corresponding to the target multimedia resource in the target recommendation tree. For example, the received target recommendation tree is shown in FIG. 4, and the target multimedia resource can be A1, so that the root node where A1 is located is can be determined as the target parent node. Furthermore, the multimedia resources A11 and A12 corresponding to the two child nodes of the target parent node may be taken as the recommended multimedia resources. The terminal can play target multimedia resource A1 on the multimedia playing page, and display the presenting information of A11 and the presenting information of A12 on the multimedia playing page.

FIG. 9 is a flowchart illustrating a method for generating a recommendation tree for multimedia resources according to some implementations. As shown in FIG. 9, the method for generating the recommendation tree for the multimedia resource is executed by the server, and may include the following steps.

In S901, a target recommendation tree request is received, and the target recommendation tree request may include user information.

In some implementations of the present disclosure, the target recommendation tree request may be received, and the target recommendation tree request may include user information, and the user information may refer to information used to uniquely identify the user, such as the user's name and the user's identity (ID).

In S903, multimedia resources corresponding to the root node and multimedia resources corresponding to at least two first-layer branch nodes are acquired based on portrait information corresponding to the user information.

In some implementations of the present disclosure, based on the portrait information corresponding to the user information, a certain number of multimedia resources may be screened from a multimedia resource library to treat as the multimedia resources corresponding to the root node and the multimedia resources corresponding to at least two first-layer branch nodes. The certain number may be the number of nodes of the root node and the at least two first-layer branch nodes. The portrait information may include the user's basic information, user's preference information for multimedia resources. The user's basic information may include the user's age, gender, occupation, etc., and the user's preference information for multimedia resources may include types, content of the multimedia resources that the user prefers, celebrities that the user prefers, and the like. This disclosure does not limit the portrait information.

In some implementations of the present disclosure, as shown in FIG. 4, the number of branch nodes in the first layer may be two, that is, the number of child nodes of the root node may be two, and according to the portrait information corresponding to the user information, three multimedia resources may be screened or selected from the multimedia resource library and take them as a multimedia resource corresponding to the root node and multimedia resources corresponding to the two first-layer branch nodes. For example, one of the three multimedia resources may be used as the multimedia resource corresponding to the root node, and the other two multimedia resources may be taken as the multimedia resources corresponding to the two first-layer branch nodes. As shown in FIG. 4, the multimedia resource corresponding to the root node may be A1, and the multimedia resources corresponding to the two first-layer branch nodes may be A11 and A12. Here, the multimedia resource corresponding to the root node and the multimedia resources corresponding to the two first-layer branch nodes may be randomly selected from three multimedia resources, which are not limited in the present disclosure.

In other implementations of the present disclosure, as shown in FIG. 4, based on the portrait information corresponding to the user information, the two multimedia resources may be screened from the multimedia resource library, and take them as a multimedia resource corresponding to the root node and a multimedia resource corresponding to one first-layer branch node. Furthermore, one multimedia resource can be randomly selected from the multimedia resource library, and can be treated as a multimedia resource corresponding to another first-layer branch node. This one multimedia resource can be used to explore the user's interests, so that the user's preference can be quickly located based on the user's selection.

The above is an example of the implementation of S903, and does not limit the present disclosure.

In S905, preference information corresponding to the first-layer branch nodes is acquired, based on the multimedia resources corresponding to the first-layer branch nodes and portrait information.

In some implementations, the preference information corresponding to one or more first-layer branch nodes may be acquired according to portrait information and tag information of the multimedia resources corresponding to the first-layer branch nodes. The preference information may refer to preference information for multimedia resources, which is not limited in the present disclosure.

In S907, multimedia resources corresponding to at least two second-layer branch nodes are acquired, based on preference information corresponding to the first-layer branch nodes, wherein the at least two second-layer branch nodes correspond to the first-layer branch nodes.

In some implementations of the present disclosure, the multimedia resources corresponding to at least two second-layer branch nodes may be obtained according to the preference information corresponding to the first-layer branch nodes, wherein the at least two second-layer branch nodes correspond to the first-layer branch nodes. For example, as shown in FIG. 4, A111 and A112 corresponding to A11 are obtained; and A121 and A122 corresponding to A12 are obtained. For an implementation manner of this step, reference may be made to S803, which will not be repeated here. The present disclosure also does not limit this, as long as the acquired multimedia resources corresponding to the at least two second-layer branch nodes can be used to quickly locate the preference of the client. The at least two second-layer branch nodes corresponding to the first-layer branch nodes may refer to at least two child nodes of the first-layer branch nodes. Therefore, the root node, the first-layer branch nodes, the second-layer branch nodes, and corresponding multimedia resources can be used as the target recommendation tree. In some implementations of the present disclosure, presenting information of the multimedia resources corresponding to the root node, the first-layer branch nodes, and the second-layer branch nodes can also be obtained, so that the root node, the first-layer branch nodes, the second-layer branch nodes, corresponding multimedia resources and presenting information of the corresponding multimedia resources are used as the target recommendation tree.

In some implementations of the present disclosure, the multimedia resources corresponding to the branch nodes of the third layer may continue to be obtained, and so on, until the multimedia resources corresponding to the branch nodes of the end layer are obtained. The number of layers of the target recommendation tree may be preset, which is not limited in the present disclosure. As an example, as shown in FIG. 4, the number of layers of the target recommendation tree may be four. Taking the node of A11 as an example, the preference information corresponding to the node of A11 can be generated according to the portrait information and the tag information of A11, so that two multimedia resources A111 and A112 can be obtained according to the preference information, and the two multimedia resources A111 and A112 can be treated as the multimedia resources corresponding to two second-layer branch nodes, wherein the two second-layer branch nodes correspond to the nodes of A11.

For A112, the preference information corresponding to the node of A112 can be generated according to the tag information of A112 and the preference information corresponding to A11, that is, the preference information of the user is updated. Thereby, two multimedia resources A1121 and A1122 can be obtained according to the preference information corresponding to the node of A112; and the two multimedia resources A1121 and A1122 can be treated as multimedia resources corresponding to two third-layer branch nodes, wherein the two third-layer branch nodes correspond to the node of A112.

For A1122, the preference information corresponding to the node of A1122 can be generated according to the tag information of A1122 and the preference information corresponding to the node of A112, that is, the preference information of the user is updated. Therefore, two multimedia resources A11221 and A11222 can be obtained according to the preference information corresponding to the A1122; and A11221 and A11222 can be treated as the multimedia resources corresponding to two fourth-layer branch nodes, wherein the two fourth-layer branch nodes correspond to the nodes of A1122.

The multimedia resources corresponding to the nodes in the recommendation tree are sequentially obtained using the user's portrait information and the tag information of the multimedia resources obtained in the target recommendation tree, so that the multimedia resources can be recommended in the form of a tree, and recommending the multimedia resources based on the order of the nodes in the recommendation tree can be realized, thus improving the flexibility of multimedia recommendation and quickly locating user preferences.

FIG. 10 is a flowchart illustrating a method for acquiring multimedia resources corresponding to a root node and multimedia resources corresponding to at least two first-layer branch nodes based on portrait information corresponding to user information, according to some implementations. In some implementations, the target recommendation tree request may also include one or more selected multimedia identifications. As shown in FIG. 10, the S903 may include the following steps.

In S1001, a multimedia resource corresponding to an end multimedia identification in the selected multimedia identifications is taken as the multimedia resource corresponding to the root node.

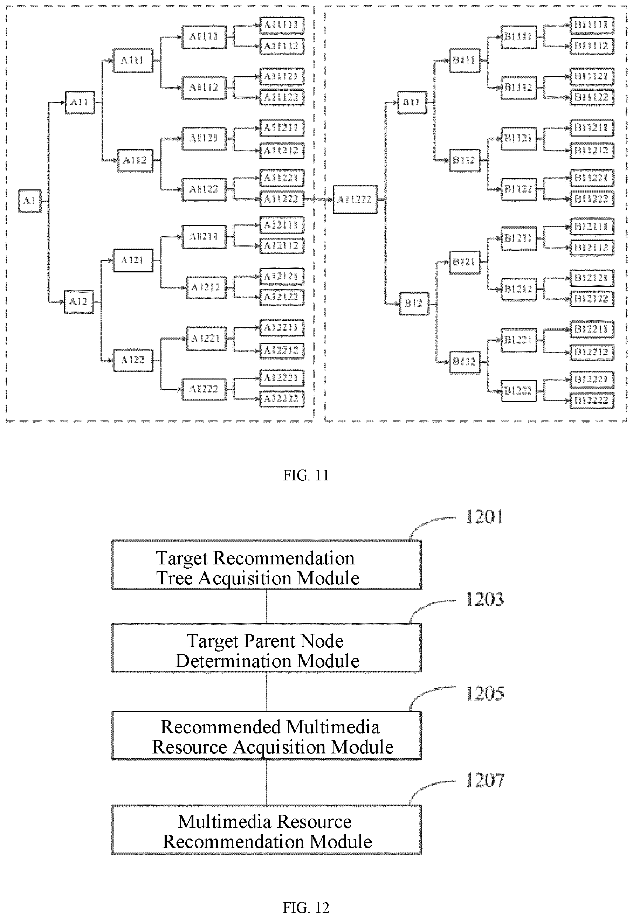

In practical applications, when the target recommendation tree request further includes the selected multimedia identifications, it can be indicated that a local recommendation tree exists locally. As shown in FIG. 11, the target recommendation tree request may be triggered when the user selects the end node in the local recommendation tree. In this case, the target recommendation tree request may also include the selected multimedia identifications. The multimedia resource corresponding to the end multimedia identification in the selected multimedia identifications may be taken as the multimedia resource corresponding to the root node.

For example, as shown in FIG. 11, the multimedia resources corresponding to the selected multimedia identifications may be A11-A112-A1122-A11222; the A11222 may be the multimedia resource corresponding to the end multimedia identification. Therefore, the A11222 can be taken as the multimedia resource corresponding to the root node of the target recommendation tree. That is, the multimedia resource corresponding to the end node selected by the user in a previous recommendation tree may be taken as the multimedia resource corresponding to the root node of the recommendation tree currently to be generated.

It should be noted that the number of layers of a previous recommendation tree and the number of layers of the recommendation tree currently to be generated may be the same or different, and the number of child nodes of each node may be the same or different, which is not limited in the present disclosure.

In S1003, interest information is determined based on the selected multimedia identifications.

In some implementations of the present disclosure, the interest information may be determined according to the tag information corresponding to the selected multimedia identifications; or the interest information may be determined according to content information of the multimedia resources corresponding to the selected multimedia identifications, which is not limited in this disclosure.

In S1005, target portrait information corresponding to the user information is generated, based on the interest information and the portrait information.

In some implementations of the present disclosure, the user's portrait information may be updated according to the interest information and the portrait information, and target portrait information corresponding to the user information is generated.

In S1007, multimedia resources corresponding to at least two first-layer branch nodes are acquired based on the target portrait information.

In some implementations of the present disclosure, multimedia resources corresponding to at least two first-layer branch nodes may be acquired according to the target portrait information. For details, refer to S903, which will not be repeated here.

In some implementations of the present disclosure, as shown in FIG. 11, when A11222 is used to generate a recommendation tree, the preset number of layers may be 4. In this case, the multimedia resources of the first layer may include B11 and B12; the multimedia resources of the second layer may include Bill, B112, B121 and B122; the multimedia resources of the third layer may include B1111, B1112, B1121, ..., B1222; the multimedia resources of the fourth layer may include B11111, B11112, B11121, ..., B12222.

By including selected multimedia identifications in the target recommendation tree request, the portrait information can be updated based on the selected multimedia identifications, and when the target recommendation tree is requested again, the target recommendation tree can be generated according to the updated target portrait information. The target recommendation tree can be generated dynamically according to the user's portrait information, and the accuracy of multimedia resource recommendation can be improved.

FIG. 12 is a block diagram of an apparatus for recommending multimedia resources according to some implementations. The apparatus for recommending multimedia resources may include a target recommendation tree acquisition module 1201, a target parent node determination module 1203, a recommended multimedia resource acquisition module 1205, and a multimedia resource recommendation module 1207.

The target recommendation tree acquisition module 1201 is configured to acquire a target recommendation tree in response to a multimedia playing instruction, and the target recommendation tree is constructed based on a content association between a target multimedia resource and recommended multimedia resources.

The target parent node determination module 1203 is configured to determine a target parent node corresponding to the target multimedia resource in the target recommendation tree.

The recommended multimedia resource acquisition module 1205 is configured to take multimedia resources corresponding to at least two child nodes of the target parent node as the recommended multimedia resources.

The multimedia resource recommendation module 1207 is configured to play playing the target multimedia resource on a multimedia playing page and display presenting information of the recommended multimedia resources on the multimedia playing page.

By recommending multimedia resources to users in the form of a recommendation tree, playing the target multimedia resource on the multimedia playing page, and displaying the presenting information of at least two recommended multimedia resources on the multimedia playing page, users can select from at least two recommended multimedia resources when viewing the target multimedia resource, thus improving the selection flexibility of recommended multimedia resources and improving the user experience; at the same time, it can also improve the user's screening efficiency of multimedia resources, and can quickly locate the user's preference, so as to achieve efficient and accurate recommendation of multimedia resources. In addition, by recommending multimedia resources to users in the form of a recommendation tree, the quantity of the recommended multimedia resources can be increased, the number of interactions with the server can be reduced, and the energy consumption of the terminal can be reduced.

In some implementations, the target recommendation tree acquisition module 1201 may include a first target recommendation tree acquisition unit and a second target recommendation tree acquisition unit.

The first target recommendation tree acquisition unit is configured to, in response to that the multimedia playing instruction includes identification information of the target multimedia resource, acquire a local recommendation tree, and in response to that a node corresponding to the identification information in the local recommendation tree is a non-end node, take the local recommendation tree as the target recommendation tree.

The second target recommendation tree acquisition unit is configured to, in response to that the multimedia playing instruction does not include the identification information of the target multimedia resource, or in response to that the node corresponding to the identification information in the local recommendation tree is an end node, request the target recommendation tree from a server.

In some implementations, the target parent node determination module 1203 may include a first target parent node determination unit and a second target parent node determination unit.

The first target parent node determination unit is configured to, in response to that the multimedia playing instruction includes the identification information of the target multimedia resource, determine a node corresponding to the identification information in the target recommendation tree as the target parent node.

The second target parent node determining unit is configured to, in response to that the multimedia playing instruction does not include the identification information of the target multimedia resource, determine a root node in the target recommendation tree as the target parent node.

In some implementations, the multimedia resource recommendation module 1207 may include a target multimedia resource playing unit and a recommended multimedia resource display unit.

The target multimedia resource playing unit is configured to play the target multimedia resource in a first region of the multimedia playing page.

The recommended multimedia resource display unit is configured to display the presenting information of the recommended multimedia resources in a second region of the multimedia playing page.

In some implementations, the second region is below the first region.

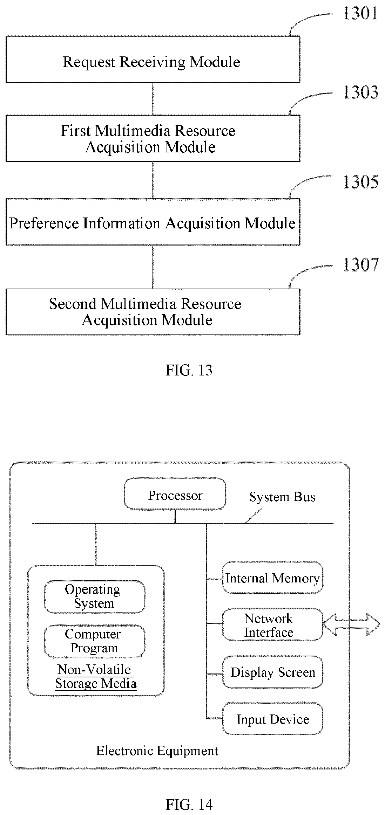

FIG. 13 is a block diagram of an apparatus for generating a recommendation tree for multimedia resources according to some implementations. As shown in FIG. 13, the apparatus for generating the recommendation tree for the multimedia resources may include a request receiving module 1301, a first multimedia resource acquisition module 1303, a preference information acquisition module 1305 and a second multimedia resource acquisition module 1307.

The request receiving module 1301 is configured to receive a target recommendation tree request; the target recommendation tree request includes user information.

The first multimedia resource acquisition module 1303 is configured to acquire a multimedia resource corresponding to a root node and multimedia resources corresponding to at least two first-layer branch nodes, based on portrait information corresponding to the user information.

The preference information acquisition module 1305 is configured to acquire preference information corresponding to the first-layer branch nodes, based on the multimedia resources corresponding to the first-layer branch nodes and the portrait information.

The second multimedia resource acquisition module 1307 is configured to acquire multimedia resources corresponding to at least two second-layer branch nodes based on the preference information corresponding to the first-layer branch nodes, wherein the at least two second-layer branch nodes correspond to the first-layer branch nodes.

In some implementations, the target recommendation tree request further includes one or more selected multimedia identifications; and the first multimedia resource acquisition module 1303 may include a root node multimedia resource acquisition unit, an interest information determination unit, a target portrait information generation unit, and a first multimedia resource acquisition unit.

The root node multimedia resource acquisition unit is configured to take a multimedia resource corresponding to an end multimedia identification in the selected multimedia identifications as the multimedia resource corresponding to the root node.

The interest information determination unit is configured to determine interest information based on the selected multimedia identifications.

The target portrait information generating unit is configured to generate target portrait information corresponding to the user information based on the interest information and the portrait information.

The first multimedia resource acquisition unit is configured to acquire multimedia resources corresponding to the at least two first-layer branch nodes based on the target portrait information.

Regarding the apparatus in the above-mentioned implementations, the specific manner in which each module performs operations has been described in detail in the implementations of the method, and will not be described in detail here.

FIG. 14 is a block diagram of electronic equipment for recommending multimedia resources according to some implementations. The electronic equipment may be a terminal, and its internal structure diagram may be as shown in FIG. 14. The electronic equipment includes a processor, a memory, a network interface, a display screen, and an input device connected by a system bus. Among them, the processor of the electronic equipment is used to provide computing and control capabilities. The memory of the electronic equipment includes a non-volatile storage medium and an internal memory. The nonvolatile storage medium stores an operating system and a computer program. The internal memory provides an environment for the execution of the operating system and computer program in the non-volatile storage medium. The network interface of the electronic equipment is used to communicate with an external terminal through a network connection. The computer program, when executed by the processor, implements a method for recommending multimedia resources. The display screen of the electronic equipment may be a liquid crystal display screen or an electronic ink display screen, and the input device of the electronic equipment may be a touch layer covered on the display screen, or a button, a trackball or a touchpad set on a shell of the electronic equipment, or an external keyboard, a track pad, or a mouse.

Those skilled in the art can understand that the structure shown in FIG. 14 is only a block diagram of a partial structure related to the solution of the present disclosure, and does not constitute a limitation on the electronic equipment to which the solution of the present disclosure is applied. The specific electronic equipment may include more or fewer components than shown in the figures, or combine certain components, or have a different arrangement of components.

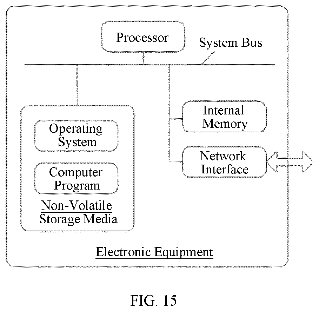

FIG. 15 is a block diagram of electronic equipment for a method for generating a recommendation tree for multimedia resources according to some implementations. The electronic equipment may be a server, and its internal structure diagram may be as shown in FIG. 15. The electronic equipment includes a processor, a memory, and a network interface connected by a system bus. Among them, the processor of the electronic equipment is used to provide computing and control capabilities. The memory of the electronic equipment includes a non-volatile storage medium and an internal memory. The nonvolatile storage medium stores an operating system and a computer program. The internal memory provides an environment for the execution of the operating system and computer program in the non-volatile storage medium. The network interface of the electronic equipment is used to communicate with an external terminal through a network connection. When the computer program is executed by the processor, it implements a method for generating a recommendation tree for multimedia resources.

Those skilled in the art can understand that the structure shown in FIG. 15 is only a block diagram of a partial structure related to the solution of the present disclosure, and does not constitute a limitation on the electronic equipment to which the solution of the present disclosure is applied. The specific electronic equipment may include more or fewer components than shown in the figures, or combine certain components, or have a different arrangement of components.

In some implementations, there is also provided electronic equipment, comprising: a processor; a memory for storing instructions executable by the processor; wherein the processor is configured to execute the instructions to implement implementations of the method for recommending multimedia resources and the method for generating a recommendation tree for multimedia resources as disclosed herein.

In some implementations, there is also provided a computer readable storage medium, when the instructions in the computer-readable storage medium are executed by the processor of the electronic equipment, enables the electronic equipment to execute the method for recommending multimedia resources and the method for generating a recommendation tree for multimedia resources in the some implementations of the present disclosure. The computer-readable storage medium may be ROM, random access memory (RAM), CD-ROM, magnetic tape, floppy disk, optical data storage device, and the like.

In some implementations, there is also provided a computer program product containing instructions, which, when run on a computer, cause the computer to execute the method for recommending multimedia resources and the method for generating a recommendation tree for multimedia resources in the some implementations of the present disclosure.

Those of ordinary skill in the art can understand that all or part of the processes in the methods of the above implementations can be implemented by instructing relevant hardware through a computer program, and the computer program can be stored in a non-volatile computer-readable storage medium, when the computer program is executed, it may include the processes of the above-mentioned method implementations. Wherein, any reference to memory, storage, database or other medium used in the various implementations provided in the present disclosure may include non-volatile and/or volatile memory. Nonvolatile memory may include read only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in various forms such as static RAM (SRAM), dynamic RAM (DRAM), synchronous DRAM (SDRAM), double data rate SDRAM (DDRSDRAM), enhanced SDRAM (ESDRAM), synchronous link (Synchlink) DRAM (SLDRAM), memory bus (Rambus) direct RAM (RDRAM), direct memory bus dynamic RAM (DRDRAM), and memory bus dynamic RAM (RDRAM), etc.

All the implementations of the present disclosure may be implemented independently or in combination with other implementations, which are all regarded as the protection scope required by the present disclosure.

Those of ordinary skill in the art can understand that all or part of the processes in the methods of the above implementations can be implemented by instructing the relevant hardware through a computer program, and the computer program can be stored in a computer-readable storage medium. When the computer program is executed, it may include the processes of the above-mentioned method implementations. Wherein, any reference to memory, storage, database or other medium used in the various implementations provided in the present disclosure may include non-volatile and/or volatile memory.

## Claims

1. A method for recommending multimedia resources, applied to a terminal, comprising:
in response to a multimedia playing instruction, acquiring a target recommendation tree, and the target recommendation tree being constructed based on a content association between a target multimedia resource and recommended multimedia resources;
determining a target parent node corresponding to the target multimedia resource in the target recommendation tree;
taking multimedia resources corresponding to at least two child nodes of the target parent node as the recommended multimedia resources; and
playing the target multimedia resource and displaying presenting information of the recommended multimedia resources on a multimedia playing page.

2. The method according to claim 1, wherein said in response to the multimedia playing instruction, acquiring the target recommendation tree comprises:
in response to that the multimedia playing instruction comprises identification information of the target multimedia resource, acquiring a local recommendation tree, and in response to that a node corresponding to the identification information in the local recommendation tree is a non-end node, taking the local recommendation tree as the target recommendation tree; and
in response to that the multimedia playing instruction does not comprise the identification information of the target multimedia resource, or in response to that the node corresponding to the identification information in the local recommendation tree is an end node, requesting the target recommendation tree from a server.

3. The method according to claim 2, wherein said determining the target parent node corresponding to the target multimedia resource in the target recommendation tree comprises:
in response to that the multimedia playing instruction comprises the identification information of the target multimedia resource, determining a node corresponding to the identification information in the target recommendation tree as the target parent node; and
in response to that the multimedia playing instruction does not comprise the identification information of the target multimedia resource, determining a root node in the target recommendation tree as the target parent node.

4. The method according to claim 1, wherein said playing the target multimedia resource and displaying presenting information of the recommended multimedia resources on the multimedia playing page comprises:
playing the target multimedia resource in a first region of the multimedia playing page;
and
displaying the presenting information of the recommended multimedia resources in a second region of the multimedia playing page.

5. The method according to claim 4, wherein the second region is below the first region.

6. A method for generating a recommendation tree for multimedia resources, applied to a server, comprising:
receiving a target recommendation tree request, the target recommendation tree request comprising user information;
based on portrait information corresponding to the user information, acquiring a multimedia resource corresponding to a root node and multimedia resources corresponding to at least two first-layer branch nodes;
based on the multimedia resources corresponding to the first-layer branch nodes and the portrait information, acquiring preference information corresponding to the first-layer branch nodes; and
based on the preference information corresponding to the first-layer branch nodes, acquiring multimedia resources corresponding to at least two second-layer branch nodes, wherein the at least two second-layer branch nodes correspond to the first-layer branch nodes.

7. The method according to claim 6, wherein the target recommendation tree request further comprises one or more selected multimedia identifications;
wherein said based on the portrait information corresponding to the user information, acquiring the multimedia resource corresponding to the root node and the multimedia resources corresponding to the at least two first-layer branch nodes comprises:
taking a multimedia resource corresponding to an end multimedia identification in the selected multimedia identifications as the multimedia resource corresponding to the root node;
determining interest information based on the selected multimedia identifications;
generating target portrait information corresponding to the user information based on the interest information and the portrait information; and
based on the target portrait information, acquiring multimedia resources corresponding to the at least two first-layer branch nodes.

8. An apparatus for recommending multimedia resources, comprising:
a target recommendation tree acquisition module configured to acquire a target recommendation tree in response to a multimedia playing instruction, the target recommendation tree being constructed based on a content association between a target multimedia resource and recommended multimedia resources;
a target parent node determination module configured to determine a target parent node corresponding to the target multimedia resource in the target recommendation tree;
a recommended multimedia resource acquisition module configured to take multimedia resources corresponding to at least two child nodes of the target parent node as the recommended multimedia resources; and
a multimedia resource recommendation module configured to play the target multimedia resource and display presenting information of the recommended multimedia resources on a multimedia playing page.

9. The apparatus according to claim 8, wherein the target recommendation tree acquisition module comprises:
a first target recommendation tree acquisition unit configured to, in response to that the multimedia playing instruction comprises identification information of the target multimedia resource, acquire a local recommendation tree, and in response to that a node corresponding to the identification information in the local recommendation tree is a non-end node, take the local recommendation tree as the target recommendation tree; and
a second target recommendation tree acquisition unit configured to, in response to that the multimedia playing instruction does not comprise the identification information of the target multimedia resource, or in response to that the node corresponding to the identification information in the local recommendation tree is an end node, request the target recommendation tree from a server.

10. The apparatus according to claim 9, wherein the target parent node determination module comprises:
a first target parent node determination unit configured to, in response to that the multimedia playing instruction comprises the identification information of the target multimedia resource, determine a node corresponding to the identification information in the target recommendation tree as the target parent node; and
a second target parent node determination unit configured to, in response to that the multimedia playing instruction does not comprise the identification information of the target multimedia resource, determine a root node in the target recommendation tree as the target parent node.

11. The apparatus according to claim 8, wherein the multimedia resource recommendation module comprises:
a target multimedia resource playing unit configured to play the target multimedia resource in a first region of the multimedia playing page; and
a recommended multimedia resource display unit configured to display the presentation information of the recommended multimedia resources in a second region of the multimedia playing page.

12. The apparatus according to claim 11, wherein the second region is below the first region.

13. An apparatus for generating a recommendation tree for multimedia resources, comprising:
a request receiving module configured to receive a target recommendation tree request, the target recommendation tree request comprising user information;
a first multimedia resource acquisition module configured to acquire a multimedia resource corresponding to a root node and multimedia resources corresponding to at least two first-layer branch nodes based on portrait information corresponding to the user information;
a preference information acquisition module configured to acquire preference information corresponding to the first-layer branch nodes based on the multimedia resources corresponding to the first-layer branch nodes and the portrait information; and
a second multimedia resource acquisition module configured to acquire multimedia resources corresponding to at least two second-layer branch nodes based on the preference information corresponding to the first-layer branch nodes, wherein the at least two second-layer branch nodes correspond to the first-layer branch nodes.

14. The apparatus according to claim 13, wherein the target recommendation tree request further comprises one or more selected multimedia identifications;
wherein the first multimedia resource acquisition module comprises:
a root node multimedia resource acquisition unit configured to take a multimedia resource corresponding to an end multimedia identification in the selected multimedia identifications as the multimedia resource corresponding to the root node;
an interest information determination unit configured to determine interest information based on the selected multimedia identifications;
a target portrait information generating unit configured to generate target portrait information corresponding to the user information based on the interest information and the portrait information; and
a first multimedia resource acquisition unit configured to acquire multimedia resources corresponding to the at least two first-layer branch nodes based on the target portrait information.

15. Electronic equipment, comprising:
a processor;
a memory for storing instructions executed by the processor;
wherein the processor is configured to:
in response to a multimedia playing instruction, acquire a target recommendation tree, and the target recommendation tree being constructed based on a content association between a target multimedia resource and recommended multimedia resources;
determine a target parent node corresponding to the target multimedia resource in the target recommendation tree;
take multimedia resources corresponding to at least two child nodes of the target parent node as the recommended multimedia resources; and
play the target multimedia resource and displaying presenting information of the recommended multimedia resources on a multimedia playing page.

16. The electronic equipment of claim 15, wherein the processor is configured to:
in response to that the multimedia playing instruction comprises identification information of the target multimedia resource, acquire a local recommendation tree, and in response to that a node corresponding to the identification information in the local recommendation tree is a non-end node, take the local recommendation tree as the target recommendation tree; and
in response to that the multimedia playing instruction does not comprise the identification information of the target multimedia resource, or in response to that the node corresponding to the identification information in the local recommendation tree is an end node, request the target recommendation tree from a server.

17. The electronic equipment of claim 16, wherein the processor is configured to:
in response to that the multimedia playing instruction comprises the identification information of the target multimedia resource, determine a node corresponding to the identification information in the target recommendation tree as the target parent node; and
in response to that the multimedia playing instruction does not comprise the identification information of the target multimedia resource, determine a root node in the target recommendation tree as the target parent node.

18. The electronic equipment according to claim 15, wherein said playing the target multimedia resource and displaying presenting information of the recommended multimedia resources on the multimedia playing page comprises:
playing the target multimedia resource in a first region of the multimedia playing page;
and
displaying the presenting information of the recommended multimedia resources in a second region of the multimedia playing page.

19. The electronic equipment of claim 18, wherein the second region is below the first region.

20. Electronic equipment, comprising:
a processor;
a memory for storing instructions executed by the processor;
wherein the processor is configured to:
receive a target recommendation tree request, the target recommendation tree request comprising user information;
based on portrait information corresponding to the user information, acquire a multimedia resource corresponding to a root node and multimedia resources corresponding to at least two first-layer branch nodes;
based on the multimedia resources corresponding to the first-layer branch nodes and the portrait information, acquire preference information corresponding to the first-layer branch nodes; and
based on the preference information corresponding to the first-layer branch nodes, acquire multimedia resources corresponding to at least two second-layer branch nodes, wherein the at least two second-layer branch nodes correspond to the first-layer branch nodes.

21. The electronic equipment according to claim 20, wherein the target recommendation tree request further comprises one or more selected multimedia identifications;
wherein the processor is configured to:
take a multimedia resource corresponding to an end multimedia identification in the selected multimedia identifications as the multimedia resource corresponding to the root node;
determine interest information based on the selected multimedia identifications;
generate target portrait information corresponding to the user information based on the interest information and the portrait information;
based on the target portrait information, acquire multimedia resources corresponding to the at least two first-layer branch nodes.

22. A storage medium, when instructions in the storage medium are executed by a processor of electronic equipment, the electronic equipment is enabled to execute:
in response to a multimedia playing instruction, acquire a target recommendation tree, and the target recommendation tree being constructed based on a content association between a target multimedia resource and recommended multimedia resources;
determine a target parent node corresponding to the target multimedia resource in the target recommendation tree;
take multimedia resources corresponding to at least two child nodes of the target parent node as the recommended multimedia resources; and
play the target multimedia resource and displaying presenting information of the recommended multimedia resources on a multimedia playing page.

23. A storage medium, when instructions in the storage medium are executed by a processor of electronic equipment, the electronic equipment is enabled to execute:
receive a target recommendation tree request, the target recommendation tree request comprising user information;
based on portrait information corresponding to the user information, acquire a multimedia resource corresponding to a root node and multimedia resources corresponding to at least two first-layer branch nodes;
based on the multimedia resources corresponding to the first-layer branch nodes and the portrait information, acquire preference information corresponding to the first-layer branch nodes; and
based on the preference information corresponding to the first-layer branch nodes, acquire multimedia resources corresponding to at least two second-layer branch nodes, wherein the at least two second-layer branch nodes correspond to the first-layer branch nodes.

24. A computer program product comprising computer instructions, when the computer instructions are executed by a processor, a method for recommending multimedia resources is implemented,
wherein the method for recommending multimedia resources comprises:
in response to a multimedia playing instruction, acquiring a target recommendation tree, and the target recommendation tree being constructed based on a content association between a target multimedia resource and recommended multimedia resources;
determining a target parent node corresponding to the target multimedia resource in the target recommendation tree;
taking multimedia resources corresponding to at least two child nodes of the target parent node as the recommended multimedia resources; and
playing the target multimedia resource and displaying presenting information of the recommended multimedia resources on a multimedia playing page.

25. A computer program product comprising computer instructions, when the computer instructions are executed by a processor, a method for generating a recommendation tree for multimedia resources is implemented,
wherein the method for generating a recommendation tree for multimedia resources comprises:
receiving a target recommendation tree request, the target recommendation tree request comprising user information;
based on portrait information corresponding to the user information, acquiring a multimedia resource corresponding to a root node and multimedia resources corresponding to at least two first-layer branch nodes;
based on the multimedia resources corresponding to the first-layer branch nodes and the portrait information, acquiring preference information corresponding to the first-layer branch nodes; and
based on the preference information corresponding to the first-layer branch nodes, acquiring multimedia resources corresponding to at least two second-layer branch nodes, wherein the at least two second-layer branch nodes correspond to the first-layer branch nodes.
